(19)

**Europäisches Patentamt**
**European Patent Office**
**Office européen des brevets**

(11) **EP 4 504 537 B1**

(12) **EUROPEAN PATENT SPECIFICATION**

(45) Date of publication and mention
of the grant of the patent:
**17.09.2025 Bulletin 2025/38**

(21) Application number: **22721004.4**

(22) Date of filing: **06.04.2022**

(51) International Patent Classification (IPC):
**B60K 1/02** *(2006.01)* **B60W 10/08** *(2006.01)*
**B60W 10/184** *(2012.01)* **B60W 30/182** *(2020.01)*
**B60W 30/188** *(2012.01)* **B60L 50/60** *(2019.01)*

(52) Cooperative Patent Classification (CPC):
**B60W 10/08; B60K 1/02; B60L 7/10; B60L 7/24;**
**B60L 15/2045; B60W 10/184; B60W 30/182;**
**B60W 30/188;** B60K 2001/001; B60L 2200/36;
B60L 2220/42; B60W 2050/0031; B60W 2300/147;
B60Y 2200/14; B60Y 2200/148

(86) International application number:
**PCT/EP2022/059048**

(87) International publication number:
**WO 2023/193893 (12.10.2023 Gazette 2023/41)**

(54) **METHOD AND SYSTEM FOR CONTROLLING AN ELECTRICALLY POWERED HEAVY COMMERCIAL VEHICLE**

VERFAHREN UND SYSTEM ZUR STEUERUNG EINES ELEKTRISCH ANGETRIEBENEN SCHWEREN NUTZFAHRZEUGS

PROCÉDÉ ET SYSTÈME DE COMMANDE D'UN VÉHICULE UTILITAIRE LOURD À PROPULSION ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.02.2025 Bulletin 2025/07**

(73) Proprietor: **VOLVO TRUCK CORPORATION**
**405 08 Göteborg (SE)**

(72) Inventors:
• **LAINE, Leo**
**438 94 HÄRRYDA (SE)**
• **GELSO, Esteban**
**421 51 GÖTEBORG (SE)**
• **JANARDHANAN, Sachin**
**425 32 HISINGS KÄRRA (SE)**
• **VILCA, José**
**421 71 GÖTEBORG (SE)**
• **TAGESSON, Kristoffer**
**663 41 HAMMARÖ (SE)**

• **JONASSON, Mats**
**433 49 PARTILLE (SE)**

(74) Representative: **Kransell & Wennborg KB**
**P.O. Box 2096**
**403 12 Göteborg (SE)**

(56) References cited:
**DE-A1- 102019 217 023**

• **JANARDHANAN SACHIN ET AL: "Concept design of electric cruise and startability axles for long haul heavy vehicles to maximise driving range", 2021 IEEE VEHICLE POWER AND PROPULSION CONFERENCE (VPPC), IEEE, 25 October 2021 (2021-10-25), pages 1 - 8, XP034082682, DOI: 10.1109/ VPPC53923.2021.9699364**

- TORINSSON JULIETTE ET AL: "Energy reduction by power loss minimisation through wheel torque allocation in electric vehicles: a simulation-based approach", VEHICLE SYSTEM DYNAMICS: INTERNATIONAL JOURNAL OF VEHICLE MECHANICS AND MOBILITY, vol. 60, no. 5, 10 December 2020 (2020-12-10), GB, pages 1488 - 1511, XP055941394, ISSN: 0042-3114, DOI: 10.1080/00423114.2020.1858121
- TORINSSON JULIETTE ET AL: "Energy reduction by power loss minimisation through wheel torque allocation in electric vehicles: a simulation-based approach", VEHICLE SYSTEM DYNAMICS: INTERNATIONAL JOURNAL OF VEHICLE MECHANICS AND MOBILITY, vol. 60, no. 5, 10 December 2020 (2020-12-10), GB, pages 1488 - 1511, XP055941394, ISSN: 0042-3114, DOI: 10.1080/00423114.2020.1858121

**Description**

**TECHNICAL FIELD**

The present disclosure relates to the field of heavy commercial vehicles, notably such vehicles equipped with a motion support system that includes at least two electric motors at respective axles and a set of service brakes. The present disclosure proposes an optimization-based method of controlling the motion support system in accordance with a currently active drive mode.

**BACKGROUND**

In vehicles like battery-electric vehicles or fuel-cell vehicles, several actuators in the powertrain are available to perform a motion requested by the driver or an automated driving system (ADS). The powertrain is normally an over-actuated system (more controlled inputs than outputs), so that its control represents an under-determined problem (fewer equations than unknowns), and a coordination of the actuators for motion is required. This coordination can be referred to as *control allocation.* Attempts have been made to use optimization-assisted automatic control techniques in this field, and more precisely to treat and solve the control allocation problem as an optimization problem. In this form, the control allocation problem may include minimizing a cost function that penalizes errors on global forces and moments (torques) and errors on the driver's motion request.

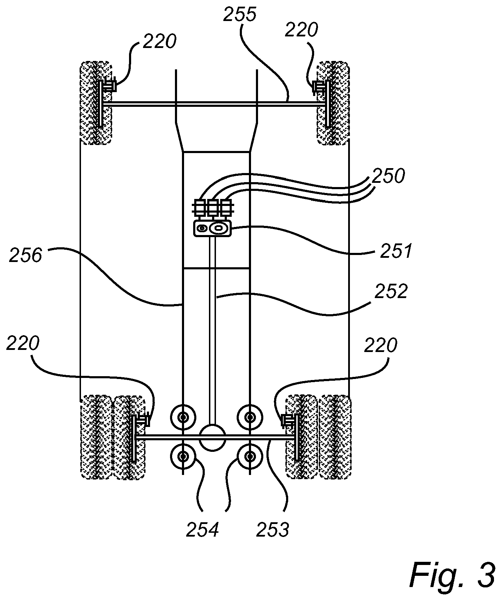

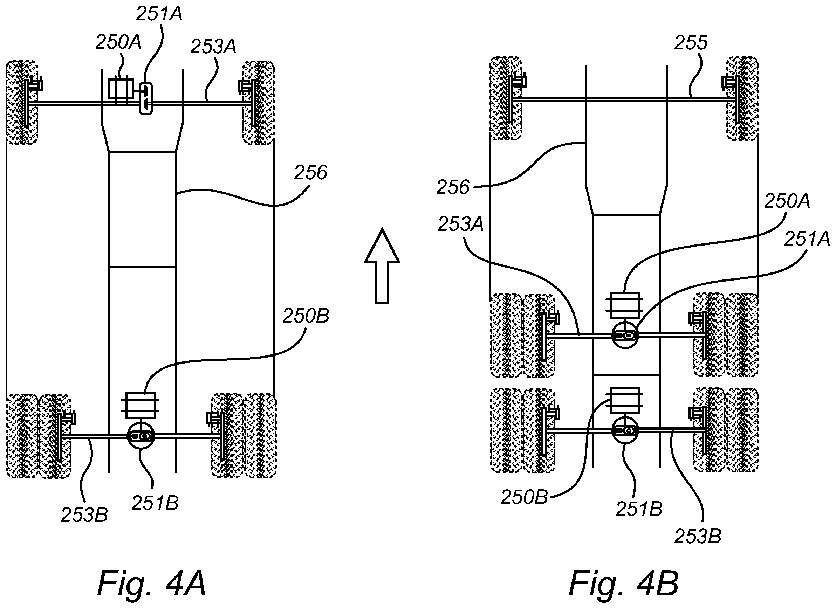

Electrically propelled heavy commercial vehicles oftentimes include multiple electric machines to accelerate and (regeneratively) brake the vehicles. Depending on the powertrain layout, the electric machines can be installed centrally on the chassis, centrally on each drive axle, or as wheel-end drive units. Figures 3 and 4 are top views of chassis of these three types, where the reference number 220 indicates a service brake, 250, 250A, 250B indicate an electric motor, 251, 251A, 251B indicate a gearbox, 252 indicates a driveshaft, 253, 253A, 253B indicate a drive axle, 254 indicates an air spring, 255 indicates a non-drive axle, 256 indicates a frame of the vehicle, and the hollow arrow represents a forward driving direction of the vehicle. As seen in figures 4A and 4B, in the latter two layouts, there is usually a transmission or gearbox associated with each axle or wheel. The gear ratios maybe equal or different for the drive axles, as a result of gearbox configuration, wheel diameters and other transmission-related properties.

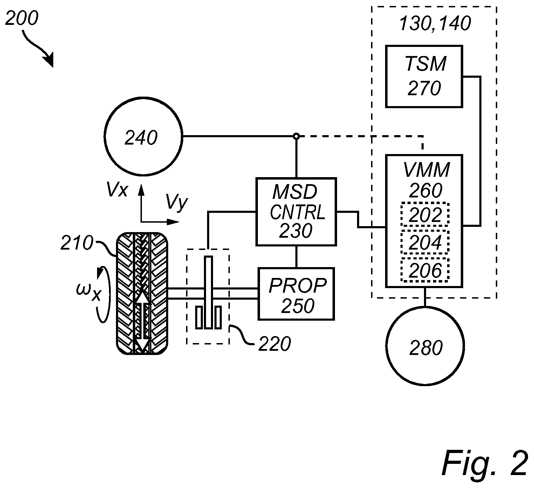

As a result of normal-load variations, various types and sizes of the installed electric motors, as well as differences in gear ratio, the operating characteristics of the electric machinery differ between different axles. In particular, each electric machine may behave differently as regards the energy lost to heat dissipation, to leakage of magnetic flux and the like. The responsibility of assuring energy-efficient operation of the vehicle within the bounds of given actuator limits is normally assigned to a centralized Vehicle Motion Management (VMM) system, which receives status signals and is aware of the capabilities of the electric machines, and which determines coordinated actuator requests on the basis of requests from a human driver, a driver-assistance unit such as a Traffic Situation Management (TSM) system, or an ADS. The general structure, to be described in detail below is seen in figure 2, where the VMM is indicated by reference number 260 and the TSM by 270. The VMM system may in particular perform a torque-to-wheel allocation in accordance with the user's preference for energy economy vs performance, as expressed by configuration settings.

The present disclosure seeks to develop the available VMM technology further, to enable new functionalities and to reduce shortcomings.

XP034082682 [S. Janardhanan, L. Laine, M. Jonasson, B. Jacobson and M. Alaküla, "Concept design of electric cruise and startability axles for long haul heavy vehicles to maximise driving range," 2021 IEEE Vehicle Power and Propulsion Conference (VPPC), Gijon, Spain, 2021, pp. 1-8, doi: 10.1109/VPPC53923.2021.9699364] discloses a modular and distributed powertrain architecture using separate cruise and startability axles, with the aim to maximize driving range. The concept is developed and evaluated using a joint hardware and control design framework for a target vehicle combination of 36 ton over a typical regional long haul drive cycle using simulations. A sensitivity study of gear ratios and motor sizes with vehicle target requirements is performed to identify the optimal configuration for the powertrain concept. The simulation results show that by configuring around 50% of the total electric machine power to the cruise axle and choosing a gear ratio between 12-13, the range capability is maximized, while satisfying startability and cruise mode operations.

**SUMMARY**

One objective of the present disclosure is to make available a method for controlling a motion support system (MSS) in an electrically propelled heavy commercial vehicle. It is a further objective to propose a MSS control method that is suitable for a vehicle where regenerative braking alone is insufficient to achieve a regulatory minimum braking force. It is a further objective to propose a MSS control method with an ability to adapts to different uses of the vehicle. A still further object is to propose a controller for these uses.

At least some of these objectives are achieved by the invention as defined by the independent claims. The dependent claims relate to advantageous embodiments of the invention.

In a first aspect of the invention, there is provided a method of controlling a MSS in a heavy commercial vehicle and/or for VMM motion coordination in such a vehicle. The method comprises the steps of repeatedly selecting a current drive mode from a plurality of predefined drive modes; solving a quadratic programming (QP) problem related to optimal control of independently controlled actuators in the MSS in accordance with a current state of the vehicle (including, for example, states of devices, machine temperature, angular and linear machine speed etc.) and subject to constraints representing actuator limits; and utilizing a solution of the QP problem for controlling the motion support system. The independently controlled actuators include at least two electric motors at respective axles and a set of service brakes. The predefined drive modes include: (i) a first drive mode, in which the QP problem represents a control allocation problem for the MSS, and (ii) a second drive mode, in which the QP problem represents minimal power loss in the motion support system.

It is recalled that the totality of the motion support devices may be considered to constitute a MSS.

According to the first aspect, because the MSS control problem is stated in terms of a QP problem, a range of numerical solvers with excellent performance and stability are available, e.g., interior-point (IP) methods, active-set (AS) methods, and Alternating Direction Method of Multipliers (ADMM) methods. Moreover, since the method has the first and second drive modes and possibly further drive modes at its disposal, the method is able to adapt to different uses of the vehicle. This makes the method suitable for use with versatile or multi-purpose vehicles, such as trucks and buses designed for both urban and highway use, agricultural and forestry equipment performing missions over wide geographical areas, as well as construction equipment that carries out multiple material-handling tasks (loading, transporting etc.). In those applications, the method can contribute to good operating economy, productivity and high user satisfaction.

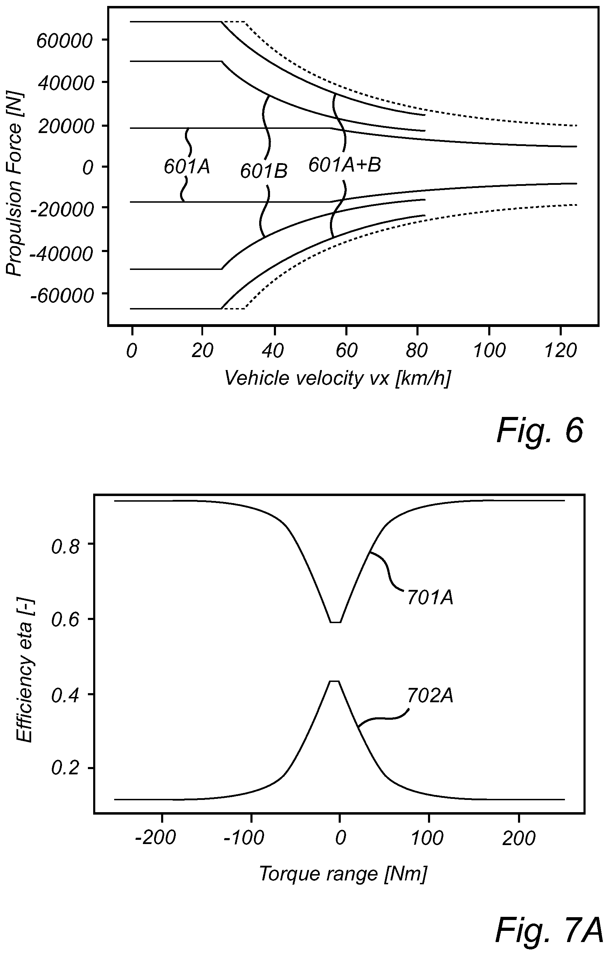

In some embodiments, the constraints in the QP problem that represent actuator limits are variable in accordance with the current state of the vehicle. This variability may be used, for example, to model a global power maximum of the vehicle; in figure 6, a gradual decay of the maximum total propulsion force of the cruise actuator 601A and of the startability actuator 601B is seen for high speeds. Another example is that regenerative braking may not be available at times when the vehicle's battery is fully loaded.

In some embodiments, the QP problem in the first drive mode (performance-oriented mode) is independent of power loss. More precisely, power losses are not explicitly (or separately) included in the QP problem and therefore not penalized specifically.

In some embodiments, the QP problem in the second drive mode (minimal power loss mode) includes relationships between power loss and torque for at least two of the actuators. Such relationships convey a more complete picture of the energy losses in the vehicle and allows a more exhaustive optimization. In some embodiments, the relationships have a linear dependence on the torque (service brakes) or a quadratic dependency on the torque (electric drives), or a combination of these.

In further developments of these embodiments, the relationships between power loss and torque are provided as smooth approximations of measurements or simulations. The smoothness of these relationships may lead to a better-conditioned QP problem, which can be solved with maintained accuracy but reduced computational cost.

As a primary use case of the invention, heavy commercial vehicles with a relatively limited electric propulsion power (and hence an equally limited electric regenerative braking power) per unit mass of the vehicle are envisioned. The power-to-mass ratio may be 20 kW/ton or less, 10 kW/ton or less, or 5 kW/ton or less. Even lower power-to-mass ratios can be expected in connection with special road transports, oversize loads and the like. Because a regulatory minimum value applies to the braking efficiency of every vehicle in traffic (e.g., ≥3 kN/ton, ≥4 kN/ton, ≥5 kN/ton), the propulsion power limitation becomes especially relevant in an electric vehicle. Already at a moderate speed of 50 km/h, a momentary braking force of 3 kN/ton converts about 42 kW of kinetic energy per ton of vehicle mass, namely, into battery energy or heat. A power of 42 kW/ton is usually much higher than can be achieved with purely regenerative braking (i.e., conversion into battery energy), so that the service brakes normally must be engaged when the vehicle moves at street or highway speed. The vehicle's operating economy may benefit from using the service brakes with moderation, and in a purposeful combination with regenerative braking on one or more axles. If different relationships between power loss and torque apply to the different axles, the balancing and combining of all these potential braking actuators is a non-trivial optimization problem.

In a second aspect of the invention, there is provided a controller configured to control a MSS in a heavy commercial vehicle. The controller may be suitable for deployment as a VMM controller in the vehicle. It includes an input interface configured to receive data indicative of a current vehicle state, processing circuitry configured to perform the method of the first aspect, and an output interface configured to feed control signals to the MSS.

A controller with the technical features according to the second aspect of the invention generally shares the effects and advantages of the first aspect, and it can be embodied with an equal degree of technical variation.

The invention further relates to a computer program containing instructions for causing a computer, or the controller in particular, to carry out the above method of the first aspect. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order described, unless explicitly stated.

## BRIEF DESCRIPTION OF THE DRAWINGS

Aspects and embodiments are now described, by way of example, with reference to the accompanying drawings, on which:

figure 1 is a side view of a commercial vehicle;

figure 2 is a block diagram illustrating a control architecture for an electrically propelled vehicle, including a VMM system;

figures 3, 4A and 4B are top views of vehicle chassis with different powertrain layouts;

figure 5 is a top view of a vehicle chassis, in which quantities related to motion control are introduced;

figure 6 are plots of the achievable greatest positive and negative propulsion force on two different axles of a vehicle, as a function of velocity;

figures 7A and 7B are plots of the respective dependencies on torque of an efficiency coefficient $\eta$ of a cruise axle and a start axle of a vehicle;

figure 8 show respective relationships between power loss and torque for the cruise axle and the start axle; and

figure 9 is a flowchart of a MSS control method according to embodiments herein.

## DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

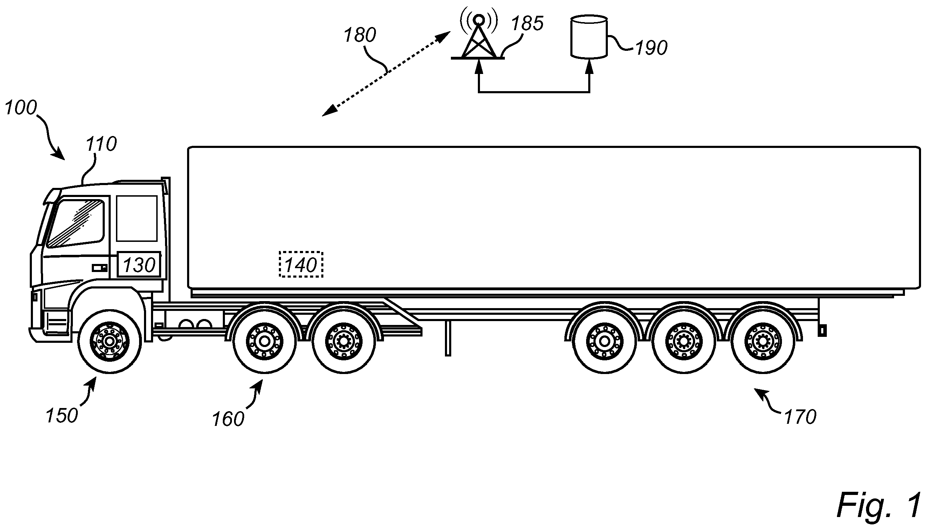

Figure 1 is a side view of a commercial vehicle 100 to which the herein disclosed techniques can be applied. The vehicle 100 comprises a tractor or towing vehicle 110 supported on front wheels 150 and rear wheels 160, at least some of which are driven wheels. Normally though not necessarily, all the wheels on the tractor 110 are braked wheels. The tractor 110 is configured to tow a first trailer unit 120 supported on trailer wheels 170 and on a fifth-wheel connection in a per se known manner. The trailer wheels 170 are normally braked wheels but may also comprise driven wheels on one or more axles. It is appreciated that the herein disclosed techniques can be applied with advantage also to other types of heavy commercial vehicles, such as single-unit vehicles, tractor-trailer combinations connected by a drawbar or another solid coupling, construction equipment, buses, and the like.

Specifically, the tractor 110 comprises a vehicle unit computer (VUC) 130, or control unit, for controlling various functionalities, including propulsion, braking, and steering. Some trailer units 120 also comprise a VUC or control unit 140 for controlling various functionalities of the trailer 120, such as braking of trailer wheels 170, and sometimes also steering and propulsion of such wheels. The VUCs 130, 140 may be implemented in a centralized fashion or distributed over several processing components. Parts of the vehicle-control functionalities may be executed remotely, e.g., on a remote server 190 connected to the vehicle 100 via a wireless link 180 extending from a wireless access network 185 to a transceiver (not shown) in the vehicle 100.

The VUC 130 on the tractor 110 (and possibly also the VUC 140 on the trailer 120) may be configured to execute vehicle control methods which are organized according to a layered functional architecture where some functionality may be comprised in a traffic situation management (TSM) domain in a higher layer and some other functionality may be comprised in a vehicle motion management (VMM) domain residing in a lower functional layer.

The motion control architecture of the vehicle 100 will now be described with reference to figure 2. This block diagram schematically illustrates functionality 200 for controlling a wheel 210 by some example motion-support devices (MSDs), or actuators, including a service brake 220 (such as a disc brake or a drum brake) and a propulsion device 250. The term service brake 220 can be any type of a non-regenerative brake designed to convert kinetic energy more or less completely into thermal energy. The service brakes 220 may be implemented, for example, as friction brakes (e.g., electromechanical or pneumatic disc or drum brakes) or contactless brakes (e.g., eddy-current brakes). The service brake 220 and the propulsion device 250 are examples of wheel torque-generating devices, which may also be referred to as actuators and which can be controlled by one or more MSD control units 230. The totality of the motion support devices may be considered to constitute a motion support system (MSS). The propulsion device 250 may be an electric motor which is operable to provide an accelerating torque in the forward and reverse directions, and preferably to provide regenerative braking in the forward and reverse directions. The propulsion device 250 is supplied, via suitable drive circuitry, from an electric energy source (not shown), which may be a vehicle-carried battery, a vehicle-carried generator or fuel cell, or a current collector in contact with an overhead line or third rail.

The techniques disclosed herein are suitable, in particular, for a vehicle 100 in which the propulsion devices 250 are configured for a total electric propulsion power (and an approximately equal electric regenerative braking power) per unit vehicle mass of 20 kW/ton or less, 10 kW/ton or less, or 5 kW/ton or less. The vehicle mass refers to the fully loaded condition, and with trailer(s). The total mass of the vehicle or vehicle combination with maximum design load may be of the order of tens of ton, such as ≥10 ton, ≥20 ton, ≥30 ton or ≥40 ton. The techniques are also suitable for even lower power-to-mass ratios, e.g., down to 2.2 kW/ton, which is the regulatory minimum motorization in some jurisdictions. The vehicle 100 is moreover configured for a braking force of at least 3 kN/ton, such as at least 4 kN/ton, such as at least 5 kN/ton.

The control of the actuators is based on, e.g., measurement data obtained from a wheel-speed sensor 240 and from other vehicle-state sensors 280, such as radar sensors, lidar sensors, as well as vision-based sensors such as camera sensors and infra-red detectors. Other example wheel torque-generating motion support devices, which may be controlled according to the principles discussed herein, are engine retarders and power steering devices. Each MSD control unit 230 may be arranged to control one or more actuators; for example, one MSD control unit 230 may be configured to control both wheels on an axle.

A Traffic Situation Management (TSM) function 270 plans the driving operation with a relatively brief time horizon. This planning corresponds to stabilization (operational decision-making), which is hierarchically below guidance (tactical decision-making), which is in turn a layer below navigation (strategic decision-making). The TSM function may be configured for decision-making of the order of 10 seconds. The vehicle maneuvers to be planned and executed by the TSM function 270 can be associated with acceleration profiles and curvature profiles that describe a desired vehicle velocity and turning pattern for a given maneuver, that is, these quantities as functions of time over the time horizon of the TSM function 270. The TSM function 270 continuously supplies the desired acceleration profiles $a_{req}$ and curvature profiles $c_{req}$ to a VMM controller 260, which is configured to perform force and torque allocation to meet the requests from the TSM function 270 in a safe and robust manner. The VMM controller 260 may be structured into an input interface 202 configured to receive data indicative of a current vehicle state from the sensors 240, 280, a set of processing circuitry 204, and an output interface 206 configured to feed control signals to the MSS, preferably by the intermediary of an MSD controller 230.

The VMM controller 260 continuously feeds back capability information to the TSM function 270 detailing the current capability of the vehicle in terms of forces, maximum velocities, accelerations etc. that can be generated. The TSM function 270 may act as - or include - an automated driving system (ADS), i.e., it accepts a driving mission from a user and autonomously generates acceleration profiles $a_{req}$ and curvature profiles $c_{req}$ for carrying out the mission. Acceleration profiles and curvature profiles may alternatively be obtained from a driver of the heavy duty vehicle via normal control input devices such as a steering wheel, accelerator pedal and brake pedal. Advanced VMM functionalities may be combined with legacy manual driver control input to form so-called advanced driver assistance systems (ADASs).

The VMM controller 260 may operate with a time horizon of the order of 1 second. The VMM controller 260 is operable to continuously transform the acceleration profiles $a_{req}$ and curvature profiles $c_{req}$ into control commands for controlling vehicle motion functions, actuated by the different MSDs 220, 250 of the vehicle 100, which report back capability information the VMM controller 260. The capability information can be used to formulate or update constraints in a vehicle control process. The VMM controller 260 performs vehicle state or motion estimation, i.e., it continuously determines a vehicle state s comprising positions, speeds, accelerations and articulation angles of the different units in the vehicle combination by monitoring operations using input from various sensors 280 arranged on the vehicle 100, where may be arranged in conjunction with the MSDs 220, 250 though not necessarily so. The result of the motion estimation, i.e., the estimated vehicle state s, is input to a force-generation module which determines the required global forces $V = [V^{(1)}, V^{(2)}]$ for the two vehicle units, where each of $V^{(1)}, V^{(2)}$ has a longitudinal $V_x$ and a lateral $V_y$ component (and an optional yaw moment component), to cause the vehicle 100 to move according to the requested acceleration and curvature profiles. It is noted that the fulfilment of the global force requirements is always subject to the limitations of the vehicle; for example, due to combined slip, the total available road-wheel friction force is shared between the longitudinal and lateral component.

As suggested by figure 2, the VMM controller 260 and the TSM function 270 can be implemented as functional blocks within the VUCs 130, 140.

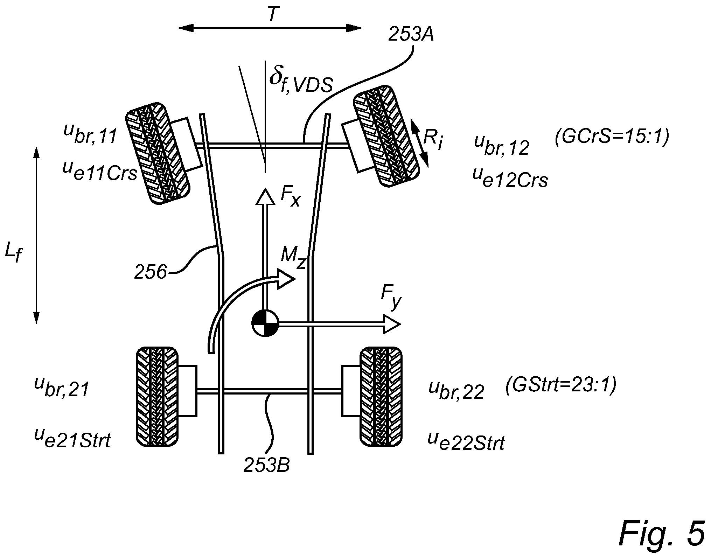

The required global force vector V is input to an MSD coordination function in the VMM controller 260, which allocates wheel forces and coordinates other MSDs, such as steering and suspension actuators. The control signals to the MSDs could include those shown in figure 5, namely

- control signals to service brakes: $u_{br,11}$, $u_{br,12}$, $u_{br,21}$, $u_{br,22}$;

- control signals to electric motors on the cruise axle 253A (cruise actuators): $u_{e11Crs}$, $u_{e12Crs}$;

- control signals to electric motors on the start axle 253B (startability actuators): $u_{e21Strt}$, $u_{e22Strt}$.

The gear ratio differs between the cruise axle 253A and the start axle 253B. Indicative gear-ratio figures for a heavy commercial vehicle are 15:1 and 23:1, respectively. A further difference may be that the cruise actuators and startability actuators are of different machine designs or different sizes. In figure 5, furthermore, $T$ denotes the track of the cruise axle 253A and $L_f$ is the distance from the vehicle center to the cruise axle 253A. The values of these quantities influence the kinematics of the vehicle and may be included in the control allocation problem. The steering angle $\delta_{f,VDS}$ can be under the control of the driver or can be controlled autonomously by the VMM controller 260. The MSDs coordinated by the VMM controller 260 ideally cooperate to exert lateral $F_y$ and longitudinal $F_x$ forces and a yaw moment $M_z$ on each of the two vehicle units, to achieve the desired motion by the vehicle combination 100.

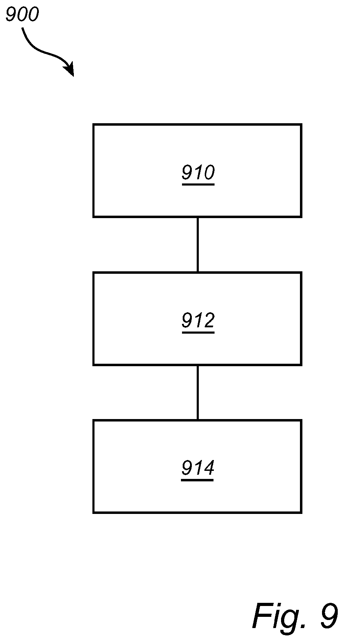

The VMM controller 260 may be configured for a behavior in accordance with the method 900 illustrated in figure 9.

The method begins with a step 910 of selecting a current drive mode from at least a first drive mode and a second drive mode. The selection may be based, in the case of an automated vehicle, on the assigned mission, e.g., the mission's time criticality, the topography of the environment where the mission is to be completed. For a vehicle which a human driver, the drive mode can be selected by observing driver behaviors, such as the degree of regularity (smoothness) of acceleration and braking over time, peak values of acceleration and braking, the topography, a manual input indicating the driver's desired mode, and the like. Pattern-recognition techniques can be used to map observed driver behavior to a suitable drive mode. Common to the autonomous and human-driven case, an energy-optimizing one of the drive modes may be imposed when the vehicle's 100 battery level falls below a predetermined threshold, such as 20%.

The step 910 can be repeated as often as necessary during operation of the vehicle 100, e.g., on an event-triggered or periodic basis. Events that could trigger a drive-mode update include driver commands. The method 900 may as well be implemented in such manner that the repetition of step 190 occurs when sensor reports are received that indicate a significant performance drop of the vehicle 100 in the recent past; this may suggest that the vehicle 100 could be operated more economically in a different drive mode, or with greater user satisfaction. If a new execution (i.e., repetition) of step 910 leads to a change of drive mode, steps 912 and 914 are repeated for the new drive mode.

The predefined drive modes include, generally speaking, a first drive mode which is performance-oriented and a second drive mode in which energy economy is a priority. The degree of specialization of the drive modes can vary between embodiments, notably, by defining a cost function to be optimized where different weighting coefficients are applied to a power-loss term and a term that represents an actuation error (e.g., difference between the actual vehicle behavior and a control request from the driver or ADS). In an extreme example, the first drive mode is a pure control allocation problem that neglects power-loss issues altogether. This may be achieved by defining a cost function that is independent of power loss, e.g., one which lacks a term that explicitly captures power losses; this directs more efforts at fulfilling the control request. The first and second drive modes may optionally include cost terms or constraints that act to ensure stability of the vehicle, in particular yaw stability.

In a second step 912, a QP problem is solved. The QP problem is related to the control of a number of independently controlled actuators (or MSDs) in the MSS, including two or more electric motors 250 at respective axles 253A, 253B and service brakes 220. The QP problem is so related in the sense that it reflects static properties (e.g., geometry, kinematics, actuator limits) and a current state of the vehicle 100, and that the control signals to the actuators can be derived from a solution of the QP problem. The QP problem may be updated (e.g., by quantitative tuning) at runtime to reflect the changing vehicle state s, such as when the vehicle moves into a higher or lower velocity range. The updating of the QP problem may occur independently of the reselection of the drive mode, and possibly more frequently, or it may be synchronized with the drive-mode reselection.

In a third step 914 of the method 900, a solution u of the QP problem is utilized for controlling the motion support system. Depending on how the QP problem has been formulated, the solution u can either be used as a control signal directly, or it has to be processed to be suitable for this purpose. As mentioned, the execution of the method 900 may resume from step 910 on a periodic or event-triggered basis.

To formulate an optimization problem for the actuator coordination of the motion control problem, the inputs are vehicle parameters like mass, inertia, tire radius, tire cornering stiffness, and desired control targets like desired longitudinal and lateral forces, target service brake power and target powertrain power. It is assumed that the MSS can be modelled, in the neighborhood of a working point at the current vehicle state, as a linear dynamical system with a state vector $x$ governed by the following equations

$$\begin{cases} x'(t) = Ax(t) + Bu(t) \\ y(t) = Cx(t) + Du(t) \end{cases}$$

where $y$ is an observation signal and $A, B, C, D$ are constant matrices. This may represent a linearization of a nonlinear vehicle model which is valid at the working point. Letting $u_d$ denote desired actuator requests and $v$ denote global forces and moments, the optimization problem can be written as follows:

$$\min_u \quad \|W_u(u - u_d)\|_2^2 + \gamma \|W_v(Bu - v)\|_2^2$$
$$\text{s.t.} \quad \underline{u} \le u \le \bar{u}$$
$$Ku \le L$$
$$Mu = N$$

Here, B in the cost functional is the so-called control effectiveness matrix, basically a static model of the global forces as a function of the actuator signals, which need not coincide with $B$ in the linear dynamical system equations. The constants $\bar{u}, \underline{u}$ represent actuator limits, which can be functions of the current vehicle state. For example, as shown in figure 6, the maximum propulsion force 601A (positive and negative, corresponding to acceleration and regenerative braking) for the cruise actuators begins to decrease with velocity at about 60 km/h, due to power limitations. In the same figure, it is seen that the maximum positive and negative propulsion force 601B of the startability actuator is power-limited at velocities above 25 km/h. In figure 6, furthermore, the total propulsion force is plotted as the curves 601A+B, and the dashed lines represent a desired (or ideal) behavior which is being approximated by the combination of the startability and cruise actuators.

In the equality and inequality constraints of the optimization problem, $K, L, M, N$ are constant matrices which may absorb parts of the information contained in matrices $A, B, C, D$. The constraints may include an equality constraint on the global longitudinal force, such as $Bu = v$ in the second drive mode which ensures that the control inputs are achieved. Another equality constraint may reflect a desired brake blending, i.e., the sum of the individual service-brake forces shall equal a total requested braking force.

In the cost functional to be minimized, the matrix $W_u$ sets relative priorities how the respective components of the desired actuator-request vector $u_d$, and the matrix $W_v$ expresses the relative priorities of the global forces and moments. The constant $\gamma$ balances the importance of the first and second terms of the cost functional. Whether or not the cost functional is to penalize energy losses can be configured by assigning zero or non-zero values to specific elements of the matrices $W_u, W_v$, as will be clear from the calculations below. In the case of the $4 \times 4$ tractor chassis shown in figure 5, which has four motors and four service brakes, the optimization variable u has eight components. It is assumed that the steering angle $\delta_{f,VDS}$ is controlled by the driver, and so its current value forms part of the vehicle state s.

By expanding the terms in the cost function

$$\|W_u(u - u_d)\|_2^2 = u^T W_u^T W_u u - 2u_d^T W_u^T W_u u + C_1$$

$$\|W_v(Bu - v)\|_2^2 = u^T B^T W_v^T W_v Bu - 2v^T W_v^T W_v Bu + C_2$$

and neglecting the constants $C_1, C_2$, the above optimization problem can be written as a standard QP problem:

$$\min_{\mathbf{u}} \quad \frac{1}{2} u^T Hu + g^T u$$
$$\text{s.t.} \quad \underline{u} \le u \le \bar{u} \quad\quad\quad\quad (1)$$
$$Ku \le L$$
$$Mu = N$$

with

$$H = 2(W_u^T W_u + \gamma B^T W_v^T W_v B)$$

$$g^T = -2(u_d^T W_u^T W_u + \gamma v^T W_v^T W_v B)$$

As mentioned, several solvers capable of numerically solving the QP problem efficiently and accurately are available in the literature or as commercial software, including interior-point (IP) methods, active-set (AS) methods, and Alternating Direction Method of Multipliers (ADMM) methods. Different optimization methods have different properties, and for some problems there can be differences in the execution time, speed of convergency, solution accuracy, etc. These properties are particularly relevant for control optimizers running in embedded systems in vehicles, with limitations like the precision of the floating-point arithmetic used. The output of a solver can be an approximate solution u, which is - or can be transformed into - an actuator-signal vector including for instance brake torques and electric-machine torques. It is noted that the approximate solution need not correspond to an actual optimum; the degree of accuracy and/or convergence required may be dependent on the expected accuracy of the sensor signals, the expected accuracy of the actuators and the tolerance to minor control imperfections in the use case.

As mentioned, the equality condition $Bu = v$, where $v$ denotes global forces and moments, may be included in the QP problem (1). In some embodiments, only such $v$ are accepted which satisfy

$$\min_{\underline{u} \leq u \leq \overline{u}} Bu \leq v \leq \max_{\underline{u} \leq u \leq \overline{u}} Bu.$$

This helps ensure that the solving of the QP problem (1) is feasible.

The matrices in the cost functional may have different values in the first and second drive modes, e.g., $(H, g) = (H_1, g_1)$ or $(H, g) = (H_2, g_2)$. In the second drive mode, the matrix H in the quadratic term includes relationships between power loss and torque, and may especially include such relationships for at least two of the actuators.

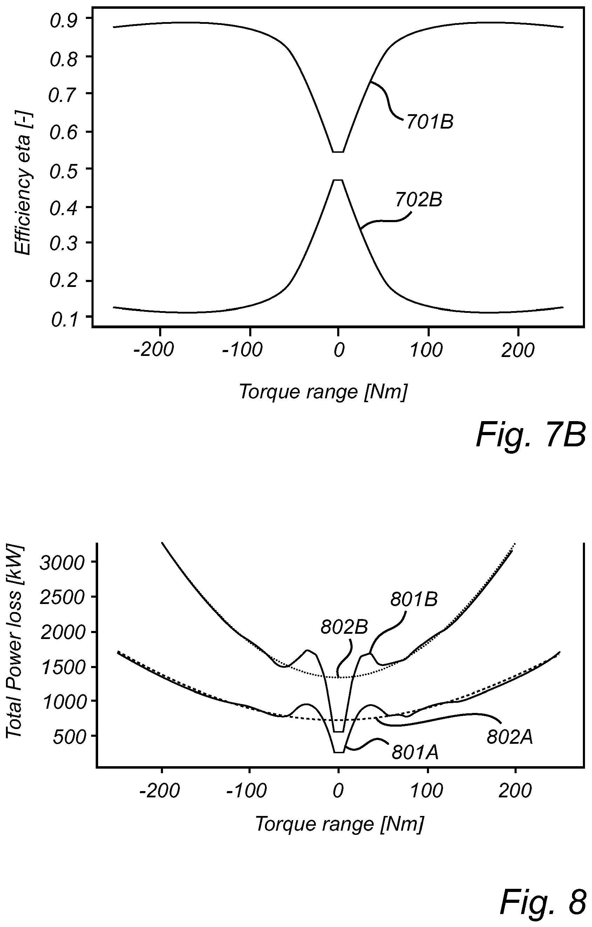

Such relationships are illustrated in figures 7A and 7B. The upper curves 701A, 701B represent an efficiency coefficient $\eta$ of the cruise actuators and the startability actuators, respectively, as a function of torque recorded while the vehicle was moving at a constant speed of 2.8 m/s. The efficiency coefficient $\eta$ may be interpreted as the ratio of the useful output mechanical power and the supplied input electric power. The lower curves 702A, 702B represent the fractional energy loss $(1 - \eta)$ for the same operating conditions.

Figure 8 is a power-loss plot in units of energy dissipation per unit time (1 kW). Consistent with the previously used reference numbers, the curves 801A, 802A refer to the cruise actuators, and the curves 801B, 802B refer to the cruise actuators. Here, the irregular curves 801A, 801B represent measured or simulated power-loss values as a function of torque, whereas the parabolas 802A, 802B represent smooth approximations of these functions, and indeed quadratic approximations. The quadratic approximations can readily be integrated in the QP formulation (1) of the quadratic problem, by configuring corresponding values of such elements in the matrix $H$ that multiply the components of the optimization variable u which represent electric motor torque. Assuming for simplicity that $u = [T_{Crs}\ T_{Strt}\ T_{Brk}]^T$ contains the cruise-actuator torque, startability-actuator torque and braking torque in this sequence, then:

$$H = \begin{bmatrix} R_{Crs}/K_{Torq,Crs}^2 & 0 & 0 \\ 0 & R_{Strt}/K_{Torq,Strt}^2 & 0 \\ 0 & 0 & R_{Brk} \end{bmatrix}$$

The constants $K_{Torq,Crs}$ and $K_{Torq,Strt}$ may depend on gear ratios, wheel radii and similar parameters. Further, $R_{Brk}$ may be set to a small positive value, such that $H$ is positive definite. In a more realistic formulation, each of the torques $[T_{Crs}\ T_{Strt}\ T_{Brk}]$ has multiple components corresponding to different wheels of the vehicle 100.

The matrix $g$ in the linear term can be used to model the power losses of the service brakes 220, i.e., the rate at which kinetic energy is converted by these brakes. A relationship on the following form is expected:

$$P_{lossServiceBrakes,j} = b T_{Brk}$$

where b is a linear function of wheel speed $\omega_x$ and $T_{Brk}$ again denotes service-brake torque. Accordingly, a value $b = b(\omega_x)$ is computed from the current wheel speed, as part of the current vehicle state reported by sensors 240, 280, and assigned to the corresponding element of matrix $g$:

$$g = \begin{bmatrix} 0 \\ 0 \\ -b_j \end{bmatrix}$$

It is noted that the power loss for the service brake is a linear function, unlike the power loss for the electric motor which is quadratic.

For additional background relating to the modelling of the MSS and the formulation of the optimization problem, reference is made to S. Janardhanan, "Concept design of electric cruise and startability axles for long haul heavy vehicles to maximise driving range", proceedings of the 2021 IEEE Vehicle Power and Propulsion Conference (VPPC), ISBN 978-1-6654-0528-7.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

**Claims**

1.  A method (900) of controlling a motion support system (220, 250) in a heavy commercial vehicle (100), the method comprising:

    repeatedly (910) selecting a current drive mode from a plurality of predefined drive modes;
    solving (912) a quadratic programming, QP, problem related to optimal control of independently controlled actuators in the motion support system in accordance with a current state of the vehicle and subject to constraints representing actuator limits, wherein the independently controlled actuators include at least two electric motors (250) at respective axles and a set of service brakes (220); and
    utilizing (914) a solution of the QP problem for controlling the motion support system,
    wherein the predefined drive modes include:

    (i) a first drive mode, in which the QP problem represents a control allocation problem for the motion support system and the QP problem is independent of power loss, and
    (ii) a second drive mode, in which the QP problem represents minimal power loss in the motion support system.

2.  The method of claim 1, wherein the constraints representing actuator limits are variable in accordance with the current state of the vehicle.

3.  The method of claim 1 or 2, wherein the QP problem in the second drive mode includes relationships between power loss and torque for at least two of the actuators.

4.  The method of any of the preceding claims, wherein the QP problem in the second drive mode includes relationships between power loss and torque for at least one of the actuators in quadratic form and for at least another one of the actuators in linear form.

5.  The method of claim 3 or 4, wherein the relationships between power loss and torque are smooth approximations of measurements or simulations.

6.  The method of any of the preceding claims, wherein the QP problem relates to optimal control of independently controlled actuators which include an electric motor arranged as a cruise actuator and a further electric motor arranged as a startability actuator.

7.  The method of any of the preceding claims, wherein the QP problem relates to optimal control of independently controlled actuators which include one type of independent electric motors arranged on an electric drive axle as cruise actuators and a further type of independent electric motors arranged on an electric drive axle as startability actuators.

8.  The method of claim 7, wherein the cruise actuators and startability actuators differ with respect to gear ratio.

9.  The method of any of the preceding claims, wherein the QP problem relates to optimal control of actuators in a motion support system which has an electric propulsion power of at most 20 kW/ton, such as at most 10 kW/ton, such as at most 5 kW/ton.

10. The method of any of the preceding claims, wherein the QP problem relates to optimal control of actuators in a motion support system which is operable to provide a decelerating force of at least 3 kN/ton, such as at least 4 kN/ton, such as at least 5 kN/ton.

11. A controller (260) configured to control a motion support system (220, 250) in a heavy commercial vehicle (100), the controller comprising:

> an input interface (202) configured to receive data indicative of a current vehicle state;
> processing circuitry (204) configured to perform the method of any of the preceding claims; and
> an output interface (206) configured to feed control signals to the motion support system.

12. A heavy commercial vehicle (100) comprising a motion support system (220, 250) and the controller (260) of claim 11.

13. A computer program comprising instructions to cause a controller (260) to execute the steps of the method (900) of any of claims 1 to 10,
wherein the controller is configured to control a motion support system (220, 250) in a heavy commercial vehicle (100).

**Patentansprüche**

1. Verfahren (900) zur Steuerung eines Bewegungsunterstützungssystems (220, 250) in einem schweren Nutzfahrzeug (100), das Verfahren umfassend:

> wiederholtes (910) Auswählen eines aktuellen Fahrmodus aus mehreren vordefinierten Fahrmodi;
> Lösen (912) eines Problems der quadratischen Programmierung (QP), das sich auf die optimale Steuerung von unabhängig gesteuerten Aktuatoren in dem Bewegungsunterstützungssystem in Übereinstimmung mit einem aktuellen Zustand des Fahrzeugs und vorbehaltlich von Beschränkungen, die Aktuatorgrenzen darstellen, bezieht,
> wobei die unabhängig gesteuerten Aktuatoren mindestens zwei Elektromotoren (250) an jeweiligen Achsen und einen Satz von Betriebsbremsen (220) umfassen; und
> Verwenden (914) einer Lösung des QP-Problems zur Steuerung des Bewegungsunterstützungssystems, wobei die vordefinierten Fahrmodi umfassen:
>
> > (i) einen ersten Fahrmodus, in dem das QP-Problem ein Steuerungszuordnungsproblem für das Bewegungsunterstützungssystem darstellt und das QP-Problem unabhängig von Leistungsverlusten ist, und
> > (ii) einen zweiten Fahrmodus, bei dem das QP-Problem den minimalen Leistungsverlust im Bewegungsunterstützungssystem darstellt.

2. Verfahren nach Anspruch 1, wobei die Beschränkungen, die die Aktuatorgrenzen darstellen, in Abhängigkeit vom aktuellen Zustand des Fahrzeugs variabel sind.

3. Verfahren nach Anspruch 1 oder 2, wobei das QP-Problem im zweiten Fahrmodus Beziehungen zwischen Leistungsverlust und Drehmoment für mindestens zwei der Aktuatoren aufweist.

4. Verfahren nach einem der vorhergehenden Ansprüche, wobei das QP-Problem im zweiten Fahrmodus Beziehungen zwischen Leistungsverlust und Drehmoment für mindestens einen der Aktuatoren in quadratischer Form und für mindestens einen anderen der Aktuatoren in linearer Form aufweist.

5. Verfahren nach Anspruch 3 oder 4, wobei die Beziehungen zwischen Leistungsverlust und Drehmoment Näherungswerte für Messungen oder Simulationen sind.

6. Verfahren nach einem der vorhergehenden Ansprüche, wobei sich das QP-Problem auf die optimale Steuerung von unabhängig gesteuerten Aktuatoren bezieht, die einen Elektromotor, der als Fahrtaktuator angeordnet ist, und einen weiteren Elektromotor, der als Startfähigkeitsaktuator angeordnet ist, aufweisen.

**7.** Verfahren nach einem der vorhergehenden Ansprüche, wobei sich das QP-Problem auf die optimale Steuerung von unabhängig gesteuerten Aktuatoren bezieht, die einen Typ von unabhängigen Elektromotoren, die auf einer elektrischen Antriebsachse als Fahrtaktuatoren angeordnet sind, und einen weiteren Typ von unabhängigen Elektromotoren, die auf einer elektrischen Antriebsachse als Startfähigkeitsaktuatoren angeordnet sind, aufweisen.

**8.** Verfahren nach Anspruch 7, wobei sich die Aktuatoren für die Fahrt und die Aktuatoren für die Startfähigkeit in Bezug auf das Übersetzungsverhältnis unterscheiden.

**9.** Verfahren nach einem der vorhergehenden Ansprüche, wobei sich das QP-Problem auf die optimale Steuerung von Aktuatoren in einem Bewegungsunterstützungssystem bezieht, das eine elektrische Antriebsleistung von höchstens 20 kW/Tonne, wie höchstens 10 kW/Tonne, wie höchstens 5 kW/Tonne aufweist.

**10.** Verfahren nach einem der vorhergehenden Ansprüche, wobei sich das QP-Problem auf die optimale Steuerung von Aktuatoren in einem Bewegungsunterstützungssystem bezieht, das so betrieben werden kann, dass es eine Verzögerungskraft von mindestens 3 kN/Tonne, wie mindestens 4 kN/Tonne, wie mindestens 5 kN/Tonne, bereitstellt.

**11.** Steuerung (260), die konfiguriert ist, um ein Bewegungsunterstützungssystem (220, 250) in einem schweren Nutzfahrzeug (100) zu steuern, die Steuerung umfassend:

eine Eingabeschnittstelle (202), die konfiguriert ist, um Daten zu empfangen, die einen aktuellen Fahrzeugzustand anzeigen;
eine Verarbeitungsschaltung (204), die konfiguriert ist, um das Verfahren nach einem der vorhergehenden Ansprüche durchzuführen; und
eine Ausgabeschnittstelle (206), die konfiguriert ist, um Steuersignale an das Bewegungsunterstützungssystem weiterzuleiten.

**12.** Schweres Nutzfahrzeug (100) umfassend ein Bewegungsunterstützungssystem (220, 250) und die Steuerung (260) nach Anspruch 11.

**13.** Computerprogramm, das Anweisungen umfasst, die die Steuerung (260) veranlassen, die Schritte des Verfahrens (900) nach einem der Ansprüche 1 bis 10 auszuführen, wobei die Steuerung konfiguriert ist, um ein Bewegungsunterstützungssystem (220, 250) in einem schweren Nutzfahrzeug (100) zu steuern.

**Revendications**

**1.** Procédé (900) de commande d'un système d'assistance au mouvement (220, 250) dans un véhicule utilitaire lourd (100), le procédé comprenant :

la sélection répétée (910) d'un mode d'entraînement actuel parmi une pluralité de modes d'entraînement prédéfinis ;
la résolution (912) d'un problème de programmation quadratique, QP, lié à la commande optimale d'actionneurs commandés indépendamment dans le système d'assistance au mouvement en fonction de l'état actuel du véhicule et soumis à des contraintes représentant les limites des actionneurs, les actionneurs commandés indépendamment comprenant au moins deux moteurs électriques (250) sur des essieux appropriés et un jeu de freins de service (220) ; et
l'utilisation (914) d'une solution au problème QP pour commander le système d'assistance au mouvement, les modes d'entraînement prédéfinis comprenant :

(i) un premier mode d'entraînement, dans lequel le problème QP représente un problème d'allocation de commande pour le système d'assistance au mouvement et le problème QP est indépendant de la perte de puissance, et
(ii) un second mode d'entraînement, dans lequel le problème QP représente une perte de puissance minimale dans le système d'assistance au mouvement.

**2.** Procédé selon la revendication 1, dans lequel les contraintes représentant des limites d'actionneur sont variables en fonction de l'état actuel du véhicule.

3. Procédé selon la revendication 1 ou 2, dans lequel le problème QP dans le second mode d'entraînement comprend des relations entre la perte de puissance et le couple pour au moins deux des actionneurs.

4. Procédé selon l'une quelconque des revendications précédentes, dans lequel le problème QP dans le second mode d'entraînement comprend des relations entre la perte de puissance et le couple pour au moins un des actionneurs sous forme quadratique et pour au moins un autre des actionneurs sous forme linéaire.

5. Procédé selon la revendication 3 ou 4, dans lequel les relations entre la perte de puissance et le couple sont des approximations lisses de mesures ou de simulations.

6. Procédé selon l'une quelconque des revendications précédentes, dans lequel le problème de QP concerne la commande optimale d'actionneurs commandés indépendamment qui comprennent un moteur électrique agencé en tant qu'actionneur de croisière et un autre moteur électrique agencé en tant qu'actionneur de démarrage.

7. Procédé selon l'une quelconque des revendications précédentes, dans lequel le problème QP concerne la commande optimale d'actionneurs commandés indépendamment qui comprennent un type de moteurs électriques indépendants disposés sur un essieu moteur électrique en tant qu'actionneurs de croisière et un autre type de moteurs électriques indépendants disposés sur un essieu moteur électrique en tant qu'actionneurs d'aptitude au démarrage.

8. Procédé selon la revendication 7, dans lequel les actionneurs de vitesse de croisière et les actionneurs d'aptitude au démarrage diffèrent en ce qui concerne le rapport de vitesse.

9. Procédé selon l'une quelconque des revendications précédentes, dans lequel le problème QP concerne la commande optimale d'actionneurs dans un système d'assistance au mouvement qui a une puissance de propulsion électrique d'au plus 20 kW/tonne, telle qu'au plus 10 kW/tonne, telle qu'au plus 5 kW/tonne.

10. Procédé selon l'une quelconque des revendications précédentes, dans lequel le problème QP concerne la commande optimale d'actionneurs dans un système d'assistance au mouvement qui peut fonctionner pour fournir une force de décélération d'au moins 3 kN/tonne, telle qu'au moins 4 kN/tonne, telle qu'au moins 5 kN/tonne.

11. Organe de commande (260) configuré pour commander un système d'assistance au mouvement (220, 250) dans un véhicule utilitaire lourd (100), l'organe de commande comprenant :

   une interface d'entrée (202) configurée pour recevoir des données indicatives d'un état courant du véhicule ;
   un circuit de traitement (204) configuré pour exécuter le procédé selon l'une quelconque des revendications précédentes ; et
   une interface de sortie (206) configurée pour fournir des signaux de commande au système d'assistance au mouvement.

12. Véhicule utilitaire lourd (100) comprenant un système d'assistance au mouvement (220, 250) et l'organe de commande (260) selon la revendication 11.

13. Programme informatique comprenant des instructions pour amener un contrôleur (260) à exécuter les étapes du procédé (900) selon l'une quelconque des revendications 1 à 10, l'organe de commande étant configuré pour commander un système d'assistance au mouvement (220, 250) dans un véhicule utilitaire lourd (100).

EP 4 504 537 B1

*Fig. 1*

Fig. 2

Fig. 3

Fig. 4A

Fig. 4B

Fig. 5

Fig. 6

Fig. 7A

Fig. 7B

Fig. 8

900

910

912

914

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. JANARDHANAN** ; **L. LAINE** ; **M. JONASSON** ; **B. JACOBSON** ; **M. ALAKÜLA**. Concept design of electric cruise and startability axles for long haul heavy vehicles to maximise driving range. *2021 IEEE Vehicle Power and Propulsion Conference (VPPC)*, 2021, 1-8

- **S. JANARDHANAN**. Concept design of electric cruise and startability axles for long haul heavy vehicles to maximise driving range. *proceedings of the 2021 IEEE Vehicle Power and Propulsion Conference (VPPC)*, ISBN 978-1-6654-0528-7